# EUROPEAN PATENT APPLICATION

(11) **EP 3 306 373 A1**
(43) Date of publication of application: **11.04.2018**
(21) Application number: 16192591.2
(22) Date of filing: 06.10.2016
(51) Int. Cl.: G02B 27/01, H04N 13/04

(54) **METHOD AND DEVICE TO RENDER 3D CONTENT ON A HEAD-UP DISPLAY**

(71) Applicant: Harman Becker Automotive Systems GmbH, 76307 Karlsbad (DE)
(72) Inventor: HUENIG, Daniel, 72074 Tuebingen (DE)
(74) Representative: Westphal, Mussgnug & Partner Patentanwälte mbB

(57) **Abstract**

A stereoscopic head up display (HUD) is described herein. In accordance with one exemplary embodiment the autostereoscopic head up display includes an image processor and a transparent screen for displaying left and right fields of a stereoscopic image to generate a virtual 3D object perceivable by a user looking through the screen. The image processor receives 3D image data, which describes the virtual 3D object, and additional input data. The image processor is configured to calculate - based on the 3D image data and the additional input data - left field and light field of the stereoscopic image to be displayed on the transparent screen. Thereby, the additional input data comprises at least a desired position of the virtual 3D object beyond the screen and a position of the user's head relative to the transparent screen.

## Description

### TECHNICAL FIELD

The present relates to the field of stereoscopic displays, in particular to a device and a method for rendering autostereoscopic 3D images using a semitransparent head-up display.

### BACKGROUND

Recently, autostereoscopic head-up displays (HUDs) have been introduced by several automobile manufacturers and announced as the next generation of head-up displays in the automobile sector. Generally, a head-up display is any transparent display that presents data without requiring the user to look away from a desired object. Although they were initially developed for military aviation, HUDs are now used in commercial aircraft, automobiles, and other applications as well. An autostereoscopic display is a device for displaying 3D images without the need of additional equipment for the user, such as 3D-glasses (anaglyphs, LCD-shutter glasses, polarized glasses, prismatic glasses, etc.).

Particularly when applied in an automobile, an HUD may be used to overlay real-world objects in front of the automobile with artificial 3D images. Such augmentation of the perception of the real-world environment by computer-generated images is often referred to as "Augmented Reality" (AR). In the context of an automobile an Augmented Reality HUD supplements the exterior view of the traffic conditions in front of the automobile with virtual information (augmentations) for the driver. The augmented reality HUD differs from a conventional windshield HUD in that the reflected information appears to be part of the driving situation itself.

### SUMMARY

A stereoscopic head up display (HUD) is described herein. In accordance with one exemplary embodiment the autostereoscopic head up display includes an image processor and a transparent screen for displaying left and right fields of a stereoscopic image to generate a virtual 3D object perceivable by a user looking through the screen. The image processor receives 3D image data, which describes the virtual 3D object, and additional input data. The image processor is configured to calculate - based on the 3D image data and the additional input data - left field and right field of the stereoscopic image to be displayed on the transparent screen. Thereby, the additional input data comprises at least a desired position of the virtual 3D object beyond the screen and a position of the user's head relative to the transparent screen.

Further, a method for operating a head-up display (HUD) is described herein. In accordance with one exemplary embodiment, the method includes the processing of 3D image data, which describes the virtual 3D object, and additional input data to calculate - based on the 3D image data and the additional input data - left field and right field of a stereoscopic image. The method further includes displaying the left and right field of the stereoscopic image on a transparent screen to generate at least one virtual 3D object perceivable by a user looking through the transparent screen. The additional input data includes at least a desired position of the virtual 3D object beyond the transparent screen and a position of the user's head relative to the transparent screen.

A further exemplary embodiment of the autostereoscopic HUD includes an image processor and a transparent screen for displaying left and right fields of a stereoscopic image to generate a virtual 3D object perceivable by a user looking through the screen. The image processor receives 3D image data, which describes the virtual 3D object, and additional input data. The image processor is configured to calculate - based on the 3D image data and the additional input data - left field and right field of the stereoscopic image to be displayed on the transparent screen. Thereby, the stereoscopic image displayed on the transparent screen is composed of a plurality of pixels, wherein the transparent screen has a pixel size and a pixel spacing. Each pixel that is perceived as blurred is enlarged by a blur factor as compared with the pixels on the screen, and the pixel spacing is at least so large that the resulting blurred pixels as perceived by the user do not overlap.

### BRIEF DESCRIPTION OF THE DRAWINGS

The invention can be better understood with reference to the following description and drawings. The components in the figures are not necessarily to scale, emphasis instead being placed upon illustrating the principles of the invention. Moreover, in the figures, like reference numerals designate corresponding parts. In the drawings,
Fig. 1 illustrates the general principle of stereoscopic image reproduction;
Fig. 2 illustrates the phenomenon of focal blur of a pattern displayed on the screen while the eye is focusing a distant object through the screen;
Fig. 3 illustrates one example of how to improve images which are displayed on a transparent screen and thus subject to focal blur;
Fig. 4 is a block diagram illustrating one exemplary HUD system for stereoscopic image reproduction;
Fig. 5 illustrates the lines of sight of a user for the system of Fig 4;
Fig. 6 is a block diagram illustrating another exemplary HUD system for stereoscopic image reproduction including a gaze tracking system;
Fig. 7 illustrates the lines of sight of a user for the system of Fig 6, wherein the projected pattern on the screen is shifted and/or panned to match the changing position of the user relative to the screen;
Fig. 8 is a block diagram illustrating another exemplary HUD system for stereoscopic image reproduction including an object tracking system to identify the position of a real-world object that the user is looking at relative to the screen and, at the same time, to identify the position of the user's eyes (i.e. the user's gaze) as well as the user's IPD; and
Fig. 9 illustrates the lines of sight of a user for the system of Fig 7, wherein the pattern projected onto the screen is panned and adjusted according to the relative movement of the real-world object.

### DETAILED DESCRIPTION

Generally, head-up displays (HUDs) should be designed to create a virtual image that is perceived at a virtual depth beyond the physical position of the pane (e.g. the windshield of an automobile), so as to avoid the need for the driver to adjust accommodation of his/her eyes when changing the focus from the outside scenery (real-world elements) to the displayed information (artificial elements) and vice versa. Generating virtual depth is usually done with bulky arrays of lenses and mirrors, which would have to be mounted in or on the dashboard. Restrictions with regard to the available space also limit the virtual depth of the generated 3D images.

There are several factors which may have an impact on the quality of a 3D image generated by a HUD. One such factor is, for example, the vergence of the user's eyes, which is related to the virtual depth (virtual projection distance) of the 3D image. While the actual 3D image is overlaid on real-world elements in a virtual image plane that is beyond the windshield, the actual image projection on the windshield is optically outof focus and a phenomenon referred to as focal blur can be observed, which may also have an undesired impact on the quality of the 3D image. Particularly for autostereoscopic displays, parallax may lead to virtually paradox effects. For example, static objects may appear to change their position when the position of the user's head and gaze changes. However, the embodiments described herein may also be used in connection with a normal stereoscopic display.

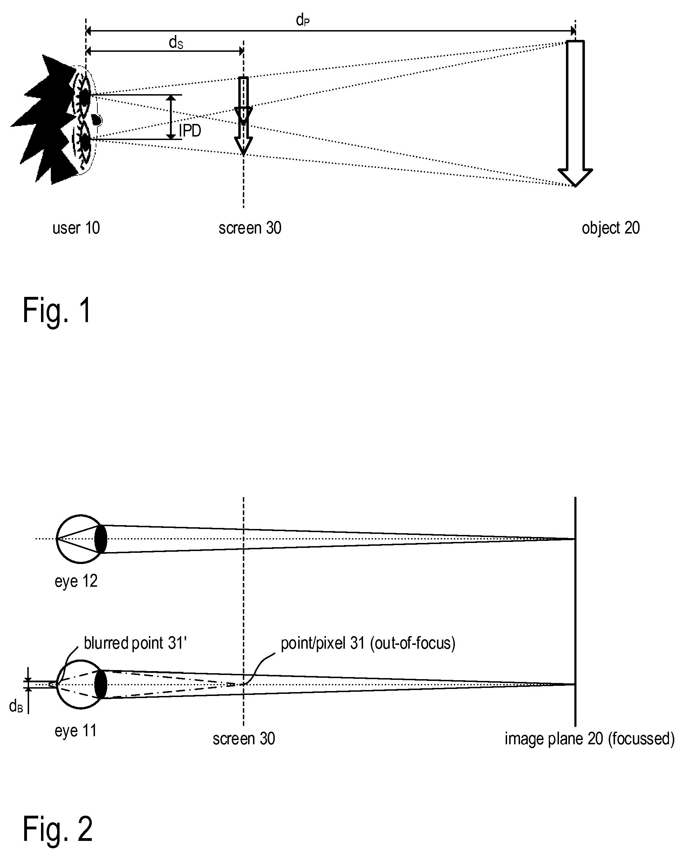

The general principle of (auto-) stereoscopic image reproduction is illustrated in Fig. 1. A user 10 (to be precise, the user's eyes) is located at a distance ds from a transparent screen 30 (e.g. the windshield of an automobile), on which a stereoscopic image (composed of left field and right field) is projected. Dependent on the user's interpupillary distance (IPD) and the distance ds, the user 10 perceives a three-dimensional virtual image that is located in a virtual image plane 20 beyond the screen 30 at a distance d_{P} from the user 10. To illustrate the correspondence between the projected left field and right field of the stereoscopic image and the virtual three-dimensional image, the lines of sight are shown in Fig. 1. These line-of sights extend from the user's left and right eyes, via the respective left and right fields of the stereoscopic image on the screen 30, to the virtual object in the image plane 20. From Fig. 1 it is apparent that, if the head of the user 10 moves, the perceived object 21 would virtually also change its position, even though the projection on the screen 30 is static. This effect is called parallax, as mentioned above. Particularly, in an automobile one cannot expect that a user's head will maintain a constant relative position with respect to the screen of a head-up display, and it would be desirable to compensate for the undesired effect of parallax while the user's head is moving or the user's gaze is changing. Generally the term position is understood as including not only the actual position of the head but also its orientation, i.e. the viewing direction.

Fig. 2 illustrates the effect of focal blur. In Fig. 2 only the user's left eye 12 and right eye 11 are depicted, as well as the screen 30 and the virtual image plane 20. Both eyes focus on a point on the image plane 20. That is, the rays 22, 23 (virtually) emanating from the point on the image plane 20 are focused on the retina (on the back side of the eye) by the respective eye's lens. The point on the image plane 20 is mapped to a point on the retina of the eye. The mapping of a point on the screen 30 is depicted only for the right eye to keep the illustration simple. As the distance ds between eyes 11 and 12 and screen 30 is shorter than the distance d_{P} between eyes 11 and 12 and image plane 20 (and the user's eyes are focused on the image plane 20 in which the stereoscopic image appears), a point on the screen 30 is mapped to a plane behind the retina, and thus the corresponding image on the retina is a blurred point and is perceived as a disk with the diameter d_{B}. This effect is referred to as focal blur and has a negative impact on the quality of the stereoscopic image reproduction. The size of the diameter d_{B} is determined by the point spread function of the optical system formed by screen 30 and the user's eye.

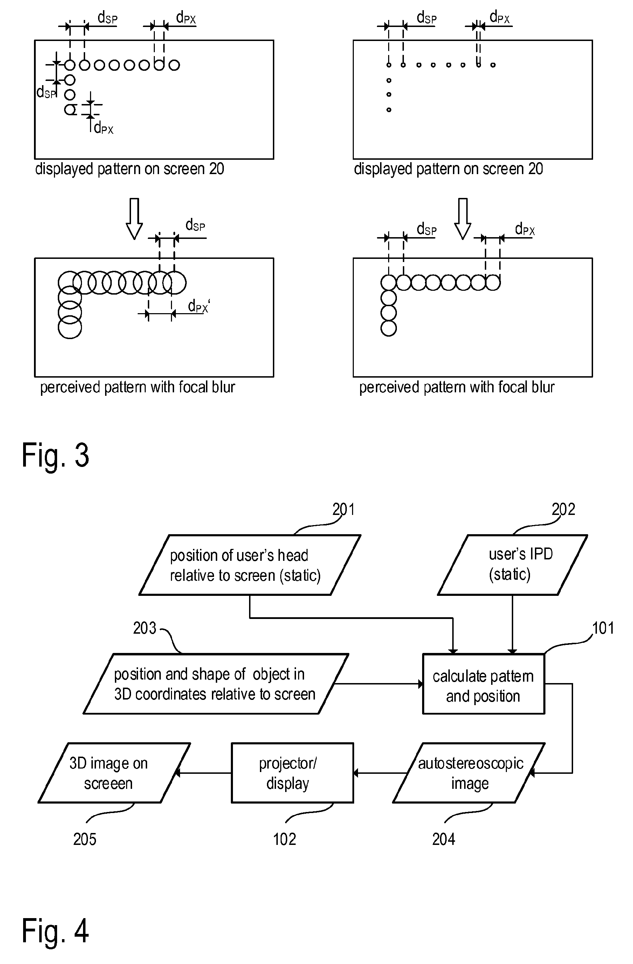

Figure 3 illustrates one exemplary method for displaying an autostereoscopic image which at least partially compensates for the negative effect of focal blur illustrated in the left diagrams of Fig. 3. In the top left diagram the individual pixels, which compose an image, have a diameter of d_{PX} on screen 30 (see Fig. 2). The pixel spacing (i.e. the distance between two neighboring pixels) is denoted by d_{SP}. Usually the size d_{PX} of a pixel is between 60 and 90 per cent of the pixel spacing dependent on the screen (d_{PX}= 0.6 ... 0.9·d_{SP}). The resulting image perceived by the user (i.e. the image on the retina of the user's eye) is shown in the bottom left diagram, in which the perceived pixel diameter is denoted by d_{PX}'. That is, the pixel appear as having a size d_{PX}' on the screen. Accordingly, the individual pixels are blurred (virtually scaled in size by a factor of d_{PX}'/d_{PX}) and thus overlap, which leads to a degradation of the perceived stereoscopic image. Overlap means that the perceived pixel size d_{PX}' is greater than the pixel spacing d_{SP} (d_{PX}'/d_{SP}>1).

According to one embodiment the pixel size d_{PX} is reduced as compared to the pixel spacing such that the size d_{PX}' of the (perceived) blurred pixels is not greater than the pixel spacing d_{SP} (d_{PX}'/d_{SP≤}1). This situation is illustrated in the top right diagram (pixels as displayed on the screen) and the bottom right diagram (perceived pattern) of Fig. 3. In other words, the scaling of the pixels due to focal blur should be considered when designing the screen of the HUD. In particular, the pixel size d_{PX} on the screen is small as compared with the pixel spacing d_{SP}, wherein "small" means small enough that the blurred pixels as perceived by the user do not overlap. The mentioned factor d_{PX}'/d_{PX} (blur factor) is given for a particular set-up of an HUD. Accordingly, a design rule for the screen is that the ratio d_{PX}/d_{SP} (pixel size over pixel spacing) should be smaller than the factor d_{PX}/d_{PX}' (reciprocal blur factor, smaller than 1). It should be noted that this design rule is to be regarded as a rule of thumb. Furthermore, it should be noted, that the term pixel size may refer to a diameter, in case of circular pixels, or to the side length of the longer side, in case of a rectangular pixel. Generally, the size is the largest dimension in the vertical or the horizontal direction (whichever is longer). In case of a rectangular pixel, the diagonal may also be used as representing the pixel size d_{PX}.

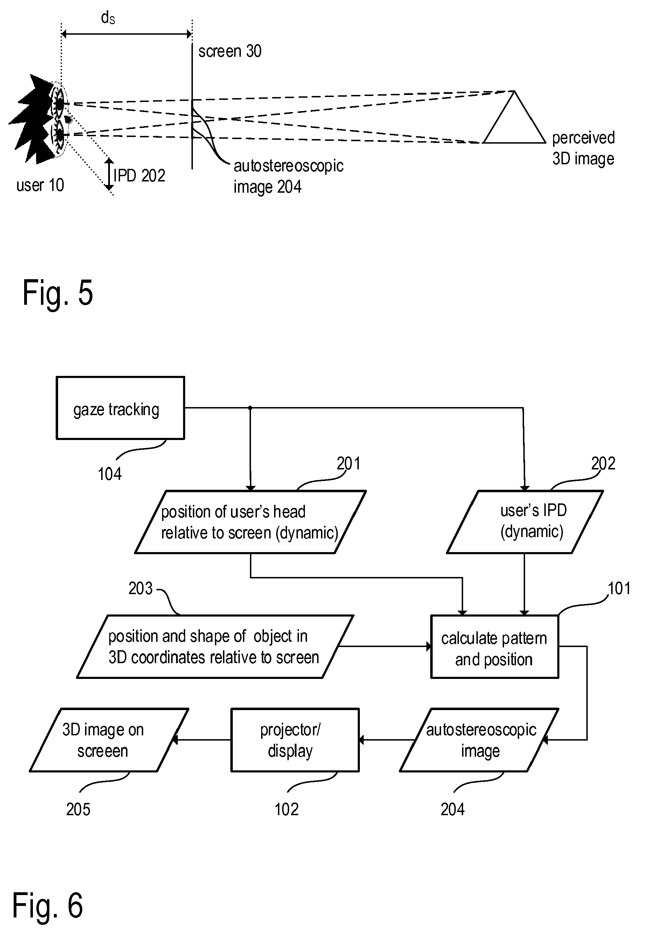

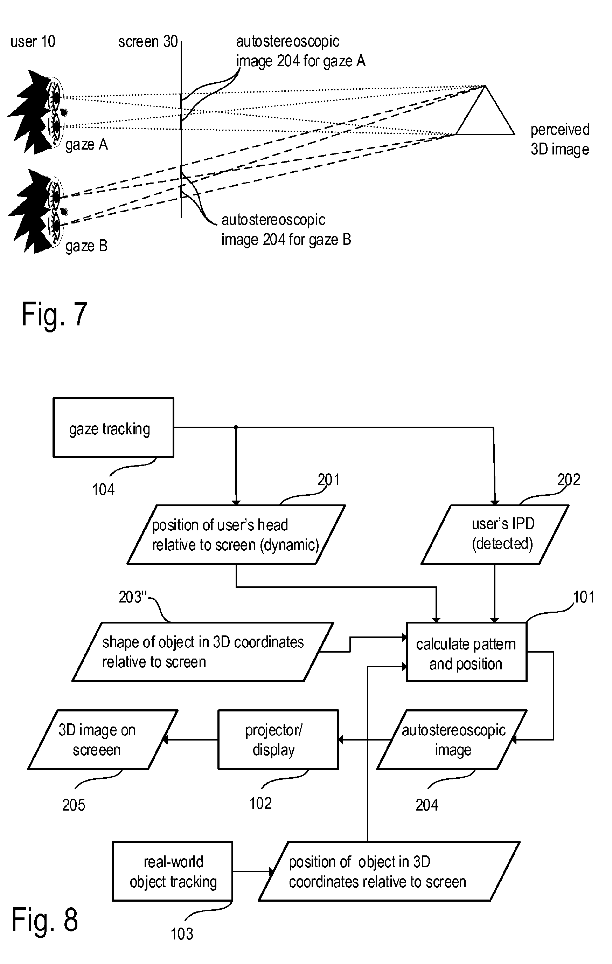

One example of an autostereoscopic HUD system is illustrated in Fig. 4 by means of a block diagram. In the diagram, the parallelograms denote a device or an algorithm executed by any suitable digital signal processor (image processor), whereas rectangles denote measured or static input, intermediate or output data of the devices or processor(s). A similar scheme is used in the following Figs. 6 and 8. Referring to Fig. 4, the illustrated system includes a processor executing an algorithm 101 configured to calculate the pattern (including left field and right field of the stereoscopic image and their positions) to be displayed, which is referred to as autostereoscopic image 204. To calculate the autostereoscopic image 204 (intermediate data), the algorithm 101 receives various input data. In particular, the algorithm is supplied with 3D coordinates (input data 203) defining the shape of the (3D-) object to be displayed as well as its position relative to the screen. Further, the algorithm 101 receives the users interpupillary distance (IPD) as a static parameter (input data 202), which may be preset for a specific user. In addition, the algorithm 101 receives the position of the user's head relative to the screen 102 (see also Fig. 2, screen 30) as a further static parameter (input data 201), which may also be preset for a specific user. If the HUD is mounted in an automobile, the relative position of the user's head may depend on the design of the car body, the position of the user's seat (relative to the screen) within the car, and the height of the user. The autostereoscopic image 204 is supplied to theHUD 102 and visualized (e.g. projected) on the screen of the HUD. This visualization results in a stereoscopic image 205 (output data) which can perceived by the user.

Figure 5 illustrates the optical paths for the system of Fig. 4, which is similar to the general illustration of Fig. 1. The user 10 is located at a defined position (e.g., input data 201 in Fig. 4 represented by distance ds in Fig. 5) relative to the transparent screen 30 (e.g. the windshield of an automobile), on which the stereoscopic image 204 is projected. The user's relative position 201 and his/her IPD 202 are, in the present example, static (preset) input data for algorithm 101 mentioned above with reference to Fig. 4. The lines of sight connecting the user's left and right eyes, the respective left or right fields of the stereoscopic image on the screen 30 and the resulting virtual object are also illustrated. Several methods of implementing the algorithm 101 to convert the 3D coordinates into stereoscopic image data exist. Such image processing algorithms are as such known and thus not further discussed here.

As mentioned with reference to Fig. 1, an effect referred to as parallax may deteriorate a natural perception of the displayed 3D object when the position of the user's head and the user's gaze (i.e. his/her gaze point) changes. Furthermore, the actual perception of the 3D image depends on the user's IPD, which is typically somewhat smaller for women as compared to the IPD of men (average IPD is roughly 62 mm for women and 65 mm for men). Of course the IPD of men and women is subject to a statistical variance. The system illustrated in Fig. 6 is essentially identical with the system of Fig. 4. However, the system of Fig. 6 includes an additional head and gaze tracking unit 104 which is configured to measure the user's IPD as well as the relative position and orientation (viewing direction) of the user's head relative to the screen (cf. Fig. 5, screen 30). By using the head and gaze tracking unit 104, the input data 201 (position of user's head) and input data 202 (user's IPD) need not be static but can rather be dynamically adapted to the actual situation. That is, the IPD 202 may be updated when the user changes, and the position and orientation of the user's head may be dynamically adjusted. This dynamic adjustment allows the system to react to a natural motion of the user's head and is illustrated in Fig. 7.

Similar to Fig. 5, Fig. 7 illustrates the optical paths for the system of Fig. 6. Different from Fig. 5, Fig. 7 illustrates the adjustment of the stereoscopic image 204 displayed on the screen 30 when the user 10 changes the relative position (or orientation) of his/her head. The upper portion of Fig. 7 (labelled "gaze A") is essentially identical with Fig. 5. The lower portion of Fig. 7 (labelled "gaze B") shows the user's head in a slightly different position. In order to keep the perceived 3D image at its desired (virtual) position, the stereoscopic image 204that is currently displayed on the screen 30, has to be adjusted in accordance with the change of the user's relative head position. That is, when the user's head moves from "gaze A" into "gaze B", the stereoscopic image is adjusted as illustrated in Fig. 6. It is apparent from Fig. 6 that - if the stereoscopic image 204 were static - the perceived position of the (virtual) 3D image would significantly change in a manner that may generate a paradox visual impression for the user. The adjustment of the stereoscopic image 204 is accomplished "automatically" as the relevant input parameter 201 - the position of the user's head relative to the screen - is dynamically adjusted and the algorithm 101 always receives the current value of this parameter.

As mentioned above, one objective to be achieved by the head-up display described herein is to realistically overlay electronically generated 3D images (virtual objects) with real-world objects. For example, an automobile driving ahead may be virtually tagged with a three-dimensional arrow, and points-of-interest, crosswalks or traffic signs may be highlighted with three-dimensional geometric patterns, etc. Such tagging or highlighting is achieved by the mentioned overlay of digitally created 3D images (virtual objects such as arrows, rectangles, circles, text, etc.) with the real-world objects (e.g. automobile, pedestrian, crosswalk, junction, traffic sign, point-of-interest). It is therefore useful for the artificially created (by means of the HUD) virtual object to "stick" to the real-world object which is to be tagged or highlighted. That is, when the real-world object moves and changes its position relative to the screen (e.g. the windshield of the automobile), the artificially created virtual object also has to (virtually) perform the same movement. In other words, while the real-world object moves, the 3D image generated by the HUD has to be continuously adjusted such that the virtual 3D object perceived by the user virtually moves in the same manner (relative to the screen) as the real-world object.

Figure 8 illustrates a system, which is essentially identical with the system of Fig. 6 but includes an additional object tracking unit 103 which is configured to track a specific real-world object to be tagged or highlighted. Such tracking usually includes continuously detecting the object and measuring its position relative to the screen (or relative to the automobile). For this purpose the object tracking unit 103 may use one or more cameras and include a digital image processing unit that is configured to continuously detect the desired object and calculate its position based on the images regularly captured by the camera. The object tracking unit 103 may include other sensors such as laser range finders, triangulation sensors, radar sensors, etc., in addition to or as an alternative to the camera(s). Using the object tracking unit 103 the current position (parameter 203") of the real-world object (and thus the desired position of the virtual object) can be continuously updated and supplied to the algorithm 101 which calculates the actual stereoscopic images (including left field and right field) to be displayed on the screen.

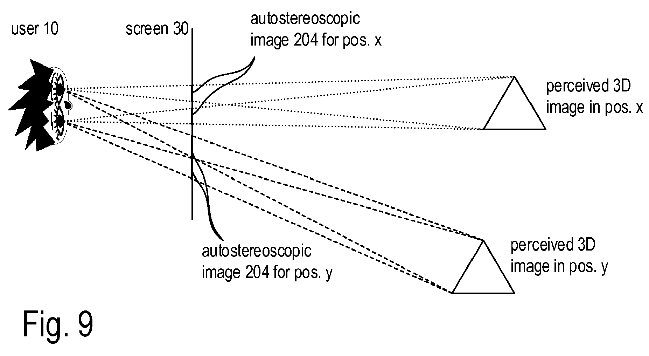

Figure 9 illustrates (in a similar manner as Fig. 7) the optical paths for the system of Fig. 8 and demonstrates the effect of the object tracking unit 103. As can be seen from Fig. 9, the autostereoscopic images 204 displayed on screen 30 are updated/adjusted while the real-world object (and thus the desired position of the virtual object) moves from position x to position y. The adjustment of the stereoscopic images 204 is accomplished "automatically" as the relevant input parameter 203" - the tracked position of the real-world object - is dynamically adjusted and the algorithm 101 always receives the current value of this parameter. It should be noted in this context that the tracked position of the real-world object (which should be tagged or highlighted by the 3D image of the virtual object) is not necessarily identical with the desired position of the digitally-generated virtual object. The positions of real-world object and virtual object may differ by a deterministic offset which is preset such that the desired position of the virtual object can be directly calculated from the tracked position of the real-world object. Digital image processing algorithms for detection and tracking of objects in captured images are as such known and thus not further discussed herein.

To further improve the visual perception of the augmented reality additional parameters may be measured and considered by the algorithm 101 which calculates the stereoscopic images from 3D input data. For example a gyroscopic sensor may be used to determine changes of tilt between the automobile (and thus the tilt of the screen) and the outside environment. With this additional tilt information the input data 203" (position of object relative to the screen) may be calculated more precisely. Accordingly, the gyroscopic sensor (tilt sensor) may be part of the mentioned object tracking unit 103.

While various embodiments of the invention have been described, it will be apparent to those of ordinary skill in the art that many more embodiments and implementations are possible within the scope of the invention. Accordingly, the invention is not to be restricted except in light of the attached claims and their equivalents. With regard to the various functions performed by the components or structures described above (assemblies, devices, circuits, systems, etc.), the terms (including a reference to a "means") used to describe such components are intended to correspond, unless otherwise indicated, to any component or structure that performs the specified function of the described component (i.e., that is functionally equivalent), even if not structurally equivalent to the disclosed structure that performs the function in the exemplary implementations of the invention illustrated herein.

## Claims

1. A stereoscopic head-up display (HUD) comprising:
a transparent screen for displaying left and right field of a stereoscopic image to generate at least one virtual 3D object perceivable by a user looking through the screen; and
an image processor receiving 3D image data which describes the virtual 3D object, and additional input data, the image processor being configured to calculate - based on the 3D image data and the additional input data - left field and right field of the stereoscopic image to be displayed on the transparent screen,
wherein the additional input data comprises at least a desired position of the virtual 3D object beyond the screen and a position of the user's head relative to the transparent screen.

2. The stereoscopic HUD of claim 1
wherein the stereoscopic image displayed on the transparent screen is composed of a plurality of pixels and the transparent screen has a pixel size and a pixel spacing;
wherein each pixel that is perceived as blurred is enlarged by a blur factor as compared with the pixels on the screen, and wherein the pixel spacing is at least so large that the resulting blurred pixels as perceived by the user do not overlap.

3. The stereoscopic HUD of claim 2,
wherein the ratio pixel size over pixel spacing of the transparent screen is lower than the reciprocal of the blur factor.

4. The stereoscopic HUD of any of claims 1 to 3 further comprising:
a tracking unit configured to track at least one specific real-world object,
wherein the desired position(s) of the virtual 3D object(s) depend(s) on detected position(s) of the tracked real-world object(s).

5. The stereoscopic HUD of claim 4,
wherein the desired position of the virtual 3D object is the detected position of a corresponding real-world object of the tracked real-world object(s) plus a constant offset position.

6. The stereoscopic HUD of any of claims 1 to 5, further comprising:
a gaze tracking unit configured to measure the relative position of the user's head relative to the transparent screen.

7. The stereoscopic HUD of claim 6, wherein the relative position of the user's head includes the orientation of the user's head relative to the transparent screen.

8. The stereoscopic HUD of claim 6 or 7,
wherein the additional input data further comprises a the user's interpupillar distance (IPD), and
wherein the gaze tracking unit is further configured to measure the user's IPD.

9. The stereoscopic HUD of any of claim 1 to 9,
wherein the virtual 3D object is a geometric pattern that is associated with a real-world object to highlight the associated real-world object.

10. A method for operating a head-up display (HUD); the method comprising:
processing 3D image data which describes the virtual 3D object, and additional input data, to calculate - based on the 3D image data and the additional input data - left field and right field of a stereoscopic image; and
displaying left and right field of the stereoscopic image on a transparent screen to generate at least one virtual 3D object perceivable by a user looking through the transparent screen;
wherein the additional input data comprises at least a desired position of the virtual 3D object beyond the transparent screen and a position of the user's head relative to the transparent screen.

11. The method of claim 10, further comprising
tracking at least one specific real-world object, wherein the desired position(s) of the virtual 3D object(s) depend(s) on detected position(s) of the tracked real-world object(s).

12. The method of claim 11, further comprising
applying a constant offset to the detected position of one of the tracked real-world object(s) to determine the desired position of a corresponding one of the virtual 3D object(s).

13. The method of any of claims 10 to 12, further comprising:
tracking the user's gaze to measure the relative position of the user's head relative to the transparent screen.

14. The method of claim 13, wherein the relative position of the user's head includes the orientation of the user's head relative to the transparent screen.

15. The method of claim 13 or 14,
wherein the additional input data further comprises a the user's interpupillar distance (IPD), the method further comprising:
measuring the user's IPD using a sensor.
